# EUROPÄISCHE PATENTSCHRIFT

(11) **EP 3 414 596 B1**
(45) Veröffentlichungstag und Bekanntmachung des Hinweises auf die Patenterteilung: **30.06.2021**
(21) Anmeldenummer: 16703981.7
(22) Anmeldetag: 11.02.2016
(51) Int. Cl.: G01S 13/87, F41G 3/26, G01S 13/46

(54) **VERFAHREN UND VORRICHTUNG ZUR ERFASSUNG EINES TREFFERFELDES**
METHOD AND DEVICE FOR RECORDING A TARGET AREA
PROCÉDÉ ET DISPOSITIF POUR DÉTECTER UN CHAMP D'IMPACT

(43) Veröffentlichungstag der Anmeldung: 19.12.2018
(73) Patentinhaber: Polytronic International Ltd., 5630 Muri (CH)
(72) Erfinder: KOCH, Christoph, 5616 Meisterschwanden (CH)
(74) Vertreter: Troesch Scheidegger Werner AG
(86) Internationale Anmeldenummer: PCT/EP2016/052929
(87) Internationale Veröffentlichungsnummer: WO 2017/137084

(56) Entgegenhaltungen:
- EP-A2- 1 517 114
- WO-A1-97/37194
- DE-U1- 29 819 394
- GB-A- 2 033 691
- US-A- 4 751 511
- US-A1- 2013 021 194
- US-A1- 2015 123 346

## Beschreibung

Die vorliegende Erfindung betrifft ein Verfahren zur Erfassung der Trefferlage von fliegenden Objekten auf einem definierten Trefferfeld und eine Vorrichtung hierfür.

Zur Bestimmung der Koordinaten des Auftreffpunkts von fliegenden Objekten, wie beispielsweise Geschossen, in einem Trefferfeld, wie beispielsweise einer Zielscheibe, ist eine Reihe unterschiedlicher Verfahren bekannt. Solche Verfahren beruhen beispielsweise darauf, dass ein eintreffendes metallisches Geschoss elektrische Kontakte zwischen elektrischen Leitern in einer Zielscheibe bewirkt. Andere Verfahren beruhen auf der Erfassung der akustischen Signale, die mit dem Mach'schen Kegel von Geschossen mit Überschall-Geschwindigkeit einhergehen.

Besonders vielseitig anwendbar sind Verfahren, welche auf der Verwendung von Radargeräten beruhen. Ein solches Verfahren ist beispielsweise aus der Druckschrift WO 2007/045104 bekannt.

Das aus der WO 2007/045104 bekannte Verfahren zur Ermittlung der Trefferlage von fliegenden Objekten auf einem definierten Trefferfeld ist dadurch gekennzeichnet, dass in mindestens einem Bereich um das Trefferfeld herum eine Anzahl von Radargeräten derart angeordnet werden, dass sich zumindest im Kernbereich des Trefferfeldes jeweils mindestens zwei Erfassungsbereiche von Radargeräten überschneiden resp. überlappen, und dass zumindest die Distanzwerte eines durch die Erfassungsbereiche der Radargeräte hindurch fliegenden Objektes erfasst werden und durch Überlagerung dieser Distanzwerte und der bekannten geometrischen Anordnung der Radargeräte untereinander die Flugbahn des Objektes ermittelt wird, und danach aufgrund dieser ermittelten Flugbahn die daraus resultierende Trefferlage im Trefferfeld berechnet wird. Weiter ist aus dieser Schrift bekannt, bei dem Verfahren die Mittelachsen der Erfassungsbereiche aller Radargeräte parallel zueinander auszurichten.

Weiter offenbaren EP 1517114 A2 und US 4751511 A Vorrichtungen zur Erfassung der Trefferlage von Geschossen auf einem Trefferfeld mit Hilfe von Radargeräten. EP 1517114 A2 offenbart zu diesem Zweck eine Anordnung von zwei an den Enden einer Messbasis angebrachte Radargeräte, deren Richtcharakteristiken sich aufwärts in Richtung auf einer vertikale Mittelebene der Messbasis hin erstrecken und deren Hauptstrahlrichtungen jeweils einen Winkel von 45° mit der Messbasis bilden (siehe Absatz [0050] der EP 1517114 A2).

Die Aufgabe der vorliegenden Erfindung besteht darin, ein verbessertes Verfahren zur Erfassung der Trefferlage von fliegenden Objekten auf einem definierten Trefferfeld zu schaffen.

Diese Aufgabe wird erfindungsgemäss durch die Merkmale des Verfahrens nach Anspruch 1 gelöst. Weiter erfindungsgemässe Ausführungsformen ergeben sich aus den Ansprüchen 2 bis 11.

Bei der Durchführung des erfindungsgemässen Verfahrens zur Ermittlung der Trefferlage von fliegenden Objekten auf einem definierten Trefferfeld, werden eine Anzahl von Radargeräten mit je einem Erfassungsbereich mit einer Mittelachse in zumindest einem Bereich in der Umgebung des Trefferfeld angeordnet. Weiter werden Distanzwerte eines durch die Erfassungsbereiche hindurch fliegenden Objektes erfasst. Dann wird durch Auswertung dieser Distanzwerte und der bekannten geometrischen Anordnung der Radargeräte die Flugbahn des Objekts ermittelt. Danach wird aufgrund der ermittelten Flugbahn die daraus resultierende Trefferlage im Trefferfeld berechnet. Das erfindungsgemässe Verfahren ist dadurch gekennzeichnet, dass sich die Erfassungsbereiche mindestens benachbarter Radargeräte mindestens bereichsweise überlappen oder berühren, dass deren Mittelachsen verschiedene Richtungsvektoren haben, dass im Bereich des Trefferfeldes eine Scheibe mit Treffersensor angebracht wird und dass bei der Ermittlung der Trefferlage berücksichtigt wird, ob der Treffersensor angesprochen hat.

Durch die Verwendung von Radargeräten zur Erfassung der fliegenden Objekte können diese Objekte praktisch jede beliebige, praktisch realisierbare Geschwindigkeit aufweisen. So sind insbesondere Geschosse sowohl im Überschallbereich, wie beispielsweise Gewehrkugeln, als auch im Unterschallbereich, wie beispielsweise Unterschall-Munition für mittel- oder grosskalibrige Pistolen, aber auch beispielsweise grosse Granaten oder ferngesteuerte oder ballistische Raketen, durch dieses Verfahren erfassbar und die Ziellage genau berechenbar.

Anordnungen, bei denen die Mittelachsen von Erfassungsbereichen verschiedene Richtungsvektoren haben, lassen sich durch sich schneidende oder windschief zueinander liegende Mittelachsen realisieren.

Die Radargeräte können in Bezug auf die Flugrichtung des Objekts sowohl vor als auch hinter der Zielfläche angeordnet sein.

Ein Treffersensor kann beispielsweise als Beschleunigungssensor, als Drucksensor oder insbesondere als Mikrophon ausgeführt sein.

Das erfindungsgemässe Verfahren erlaubt eine Erhöhung der Präzision bei der Bestimmung der Trefferlage.

In einer Ausführungsform, die, sofern nicht widersprüchlich, kombinierbar mit allen vorerwähnten und noch zu erwähnenden Ausführungsformen ist, sind die Mittelachsen der Erfassungsbereiche fächerförmig angeordnet.

Diese Ausführungsform ermöglicht es, die Radargeräte auf engem Raum anzuordnen und trotzdem ein räumlich ausgedehntes Trefferfeld zu erfassen. Dies ist vorteilhaft, wenn die Dimensionen des Trefferfeldes beispielsweise den Originalabmessungen eines Kampfpanzers entsprechen.

In einer Ausführungsform, die, sofern nicht widersprüchlich, kombinierbar mit allen vorerwähnten und noch zu erwähnenden Ausführungsformen ist, schneiden sich Mittelachsen der Erfassungsbereiche in einem Schnittpunkt.

Erklärend ist hier angefügt, dass die Mittelachsen der Erfassungsbereiche, die einen gemeinsamen Schnittpunkt haben, weder parallel noch windschief zueinander liegen. Der gemeinsame Schnittpunkt eines Paares von Mittelachsen kann insbesondere auch auf der den Erfassungsbereichen abgewandten Seite der Radargeräte liegen.

In einer Ausführungsform, die, sofern nicht widersprüchlich, kombinierbar mit allen vorerwähnten und noch zu erwähnenden Ausführungsformen ist, liegen Mittelachsen der Erfassungsbereiche auf einer Mantelfläche eines Kegels.

In dieser Ausführungsform schneiden sich alle Mittelachsen der Erfassungsbereiche in einem einzigen Schnittpunkt, nämlich der Spitze des Kegels. Die Mantelfläche des Kegels kann beispielsweise so in Bezug auf das Trefferfeld angeordnet werden, dass aus verschiedenen Richtungen anfliegende Geschosse mindestens einen Erfassungsbereich eines Radargeräts durchqueren, bevor sie in den Bereich des Trefferfeldes gelangen.

In einer Ausführungsform der beiden vorerwähnten Ausführungsformen, bei denen sich Mittelachsen der Erfassungsbereiche in einem Schnittpunkt schneiden, liegt der Schnittpunkt im Erfassungsbereich beider beteiligter Radargeräte.

In dieser Ausführungsform kann das fliegende Objekt von zwei Radargeräten gleichzeitig erfasst werden und die Distanz zu beiden Radargeräten ermittelt werden. Aus der bekannten Position der Radargeräte und den beiden Distanzen kann die Position des fliegenden Objekts genau bestimmt werden. Die Öffnungswinkel der Erfassungsbereiche der Radargeräte kann in dieser Ausführungsform so gross gewählt werden, dass jeder Erfassungsbereich das gesamte Trefferfeld abdeckt. In diesem Fall genügen zwei Radargeräte zur Ausführung des Verfahrens.

In einer Ausführungsform, die, sofern nicht widersprüchlich, kombinierbar mit allen vorerwähnten und noch zu erwähnenden Ausführungsformen ist, stehen die Richtungsvektoren der Mittelachsen zweier überlappender Erfassungsbereiche im Wesentlichen rechtwinklig zueinander.

In dieser Ausführungsform wird eine besonders hohe Präzision in der Lokalisierung der fliegenden Objekte erreicht.

In einer Ausführungsform, die, sofern nicht widersprüchlich, kombinierbar mit allen vorerwähnten und noch zu erwähnenden Ausführungsformen ist, werden die Radargeräte als Doppler-Radar betrieben.

Beim Betrieb als Doppler-Radar werden Frequenzverschiebungen der empfangenen Signale ausgewertet. Damit kann eine Relativbewegung des Objekts, welches die Radarsignale reflektiert hat, bezüglich dem Radargerät erkannt werden. Auf diese Weise können störende Signale, beispielsweise von stehenden Objekten, ausgeblendet werden. Weiter kann beispielsweise der Moment der nächsten Annäherung eines Objekts ans Radargerät ermittelt werden.

In einer Ausführungsform, die, sofern nicht widersprüchlich, kombinierbar mit allen vorerwähnten und noch zu erwähnenden Ausführungsformen ist, wird im Bereich des Trefferfeldes eine Lochscheibe mit Treffersensor angebracht und bei der Ermittlung der Trefferlage wird berücksichtigt, ob der Treffersensor angesprochen hat.

Diese Ausführungsform erlaubt eine Erhöhung der Präzision bei der Bestimmung der Trefferlage. Insbesondere kann ein Loch in der Lochscheibe in Grösse und Position so gewählt werden, dass die Lochscheibe dann von einem Geschoss getroffen oder gestreift wird, wenn die Trefferlage des Geschosses gerade ausserhalb der Grenze eines zu treffenden Gebiets liegt und eine nur radar-basierte Lokalisierung irrtümlich einen Treffer anzeigen könnte. In diesem Beispiel wird das Nicht-Ansprechen des Treffersensors an der Lochscheibe als zusätzliche Bedingung bei der Trefferauswertung herangezogen. Ein solcher Treffersensor kann beispielsweise als Beschleunigungssensor, als Drucksensor oder insbesondere als Mikrophon ausgeführt sein.

In einer Ausführungsform, die, sofern nicht widersprüchlich, kombinierbar mit allen vorerwähnten und noch zu erwähnenden Ausführungsformen ist, wird im Bereich des Trefferfelds mindestens ein Mikrophon angebracht und bei der Ermittlung der Trefferlage wird der Zeitpunkt von bei mindestens einem Mikrophon eintreffenden Schockwellen berücksichtigt.

In dieser Ausführungsform wird das von mindestens einem Mikrophon erfasst akustische Signal zur genaueren Lokalisierung des fliegenden Objekts verwendet. Insbesondere mit Überschallgeschwindigkeit fliegende Geschosse erzeugen eine auf dem sogenannten Mach'schen Kegel eine sich mit Schallgeschwindigkeit ausbreitenden Schockwelle, deren Eintreffen bei einem Mikrophon zusammen mit den Radardaten zur Lokalisierung verwendet werden kann.

In dieser Ausführungsform können beispielsweise vier Mikrophone an verschiedenen Positionen im Bereich der Zielfläche angeordnet sein. Auf diese Weise kann in denjenigen Fällen, in denen ein Geschossknall detektiert wird, die Trefferlage in horizontaler und vertikaler Richtung allein anhand der Zeitpunkte des Eintreffens des Geschossknalls bei den einzelnen Mikrophonen ermittelt werden. Nimmt man für die Auswertung der Trefferlage aus den Radarsignalen ermittelte Geschwindigkeiten des Geschosses hinzu, reichen drei Mikrophone aus um die Trefferlage in einer Ebene zu vollständig zu bestimmen. Mit der gemeinsamen Verarbeitung von Radarsignalen und von Signalen aus mindestens einem Mikrophon wird die Positionsbestimmung präziser. Ein Verfahrensschritt bei der Auswertung kann darin bestehen festzustellen, ob ein Geschossknall aufgetreten ist, d.h. ob ein Geschoss mit ausreichend hoher Geschwindigkeit eingetroffen ist. In denjenigen Fällen, in denen kein Geschossknall auftritt, kann die Auswertung der Trefferlage basierend auf den Radardaten vorgenommen werden. In der Kombination ergibt sich ein Auswertungsverfahren, welches erlaubt die Trefferlage verschiedenster Geschosstypen bezüglich desselben Ziels genau zu bestimmen.

Denkbar ist in dieser Ausführungsform auch eine Variante mit beispielsweise 16 Mikrophonen, die in Vierergruppen auf verschiedenen Seiten eines Zielobjekts angeordnet sind und mit denen die Bestimmung der Trefferlage von aus verschiedenen Richtungen anfliegenden Objekten ermöglicht wird.

In einer Ausführungsform, die, sofern nicht widersprüchlich, kombinierbar mit allen vorerwähnten und noch zu erwähnenden Ausführungsformen ist, wird ein Flugwegvektor des fliegenden Objekts berechnet.

Der Flugwegvektor kann dann in die Berechnung der Trefferlage einbezogen werden. Dies ist besonders nützlich, wenn die Abschussposition eines Geschosses nicht im Voraus bekannt ist oder wenn es sich nicht um eine im Wesentlichen lineare Flugbahnen handelt.

In einer Ausführungsform, die, sofern nicht widersprüchlich, kombinierbar mit allen vorerwähnten und noch zu erwähnenden Ausführungsformen ist, wird ein Winkel zwischen einer Verbindungslinie von einem durch einen Erfassungsbereich hindurch fliegenden Objekt zum erfassenden Radargerät und der Mittelachse des Erfassungsbereichs dieses Radargeräts aus den empfangenen Radarsignalen bestimmt, und dieser Winkel wird bei der Berechnung der resultierende Trefferlage im Trefferfeld berücksichtigt.

Eine weitere Aufgabe der vorliegenden Erfindung besteht darin, eine Vorrichtung zur Erfassung der Trefferlage von fliegenden Objekten auf einem definierten Trefferfeld zur Verfügung zu stellen.

Diese Aufgabe wird erfindungsgemäss durch eine Vorrichtung mit den Merkmalen des Anspruchs 12 gelöst. Weiter erfindungsgemässe Ausführungsformen ergeben sich aus den Ansprüchen 13 bis 16.

Diese Vorrichtung zur Durchführung des Verfahrens umfasst mit einer Auswerteeinheit wirkverbundene Radargeräte mit je einem Erfassungsbereich mit einer Mittelachse, wobei sich die Erfassungsbereiche mindestens benachbarter Radargeräte mindestens bereichsweise überlappen oder berühren und deren Mittelachsen verschiedene Richtungsvektoren haben, dadurch gekennzeichnet, dass die Vorrichtung ein Zielbild und eine Lochscheibe mit einem Treffersensor (32) umfasst, wobei das Zielbild vor, hinter oder direkt an der Lochscheibe angeordnet ist und wobei mindestens ein in die Lochscheibe geformtes Loch in Form und Position an das Zielbild angepasst ist.

Erfindungsgemäss definiert ein Zielbild das Gebiet, welches zu treffen ist. Mit Hilfe der Lochscheibe kann besonders genau überwacht werden, ob ein Geschoss tatsächlich dieses Gebiet getroffen hat. Dazu wird das Ansprechen des Treffersensors an der Lochscheibe als Ausschlusskriterium verwendet. Liegt die Trefferlage ausserhalb des Gebiets, wird die Lochscheibe vom den Geschoss getroffen oder gestreift und der Treffersensor an der Lochscheibe löst aus. Beispielsweise durch Fräsen oder Stanzen können ein Loch oder mehrere Löcher mit praktischer beliebiger Kontur in die Lochscheibe geformt werden. Auf diese Weise kann die Form des Gebiets, welches als Treffer gelten soll, dem Zielbild präzise angepasst werden.

Bei der Auswerteeinheit kann es sich beispielsweise um eine mit einem Mikroprozessor bestückte und mit Mitteln zur Datenspeicherung versehene Auswerteelektronik handeln. Die Auswerteeinheit kann auch einen digitalen Signalprozessor (DSP) und/oder einen Field Programmable Gate Array (FPGA) umfassen.

In einer Ausführungsform, die, sofern nicht widersprüchlich, kombinierbar mit allen vorerwähnten und noch zu erwähnenden Ausführungsformen ist, sind mehrere Radargeräte auf einem starren Trägerelement angeordnet.

Die Anordnung der Radargeräte auf einem starren Trägerelement sorgt für die präzise und zeitliche stabile geometrische Lage der Erfassungsbereiche der Radargeräte untereinander. Beim Anordnen der Radargeräte im Bereich des Trefferfeldes muss nur die Lage des Trägerelements in Bezug auf das Trefferfeld erfasst beziehungsweise eingestellt werden.

In einer Ausführungsform, die, sofern nicht widersprüchlich, kombinierbar mit allen vorerwähnten und noch zu erwähnenden Ausführungsformen ist, umfassen die Radargeräte eine Phased-Array-Antenne.

In dieser Ausführungsform lassen sich präzise geformte Erfassungsbereiche der Radargeräte realisieren.

In einer Ausführungsform, die, sofern nicht widersprüchlich, kombinierbar mit allen vorerwähnten und noch zu erwähnenden Ausführungsformen ist, ist der Treffersensor ein Druck- oder ein Beschleunigungssensor.

In einer Ausführungsform, die, sofern nicht widersprüchlich, kombinierbar mit allen vorerwähnten und noch zu erwähnenden Ausführungsformen ist, umfassen die Radargeräte:
- ein Antennenmodul mit mindestens einem Sendeelement und mindestens zwei voneinander beabstandeten Empfangselementen und
- eine Phasendifferenz-Messeinheit zur Bestimmung einer Phasendifferenz zwischen der Phase von Signalen, die bei den Empfangselementen eintreffen.

Diese Ausführungsform ermöglicht über eine Distanzbestimmung hinausgehende Auswertung der räumlichen Lage des fliegenden Objekts aus den Radarsignalen eines einzigen Radargeräts. Falls die Distanz von zwei untereinander beabstandeten Empfangselementen zu dem fliegenden Objekt verschieden ist, führt dies zu unterschiedliche Laufzeiten des am fliegenden Objekt reflektierten Radarsignals und damit zu einer Phasendifferenz zwischen den Signalen, die bei den Empfangselementen eintreffen. Mit der Phasendifferenz-Messeinheit kann diese Phasendifferenz bestimmt werden. Aus der Phasendifferenz kann auf die räumliche Lage des Objekts zurückgeschlossen werden. Diese Ausführungsform ermöglicht beispielsweise eine Bestimmung eines Winkels zwischen der Verbindungslinie vom Radargerät zum fliegenden Objekt und der Mittelachse der Erfassungsbereichs dieses Radargeräts.

Ausführungsbeispiele der vorliegenden Erfindung werden nachstehend anhand von Figuren noch näher erläutert. Es zeigen
Fig. 1 schematisch die Frontansicht einer gattungsgemässen Vorrichtung zur Erfassung der Trefferlage von fliegenden Objekten auf einem definierten Trefferfeld;
Fig. 2 schematisch die Frontansicht einer gattungsgemässen Vorrichtung;
Fig. 3 schematisch die Frontansicht einer weiteren gattungsgemässen Vorrichtung; und
Fig. 4 eine perspektivische, stark vereinfachte, schematische Ansicht einer erfindungsgemässen Vorrichtung.

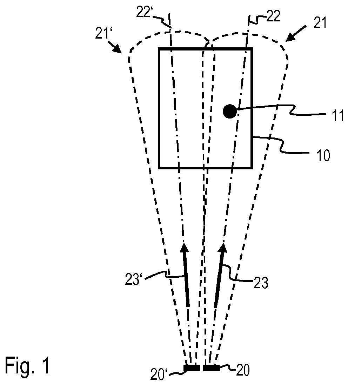

In Figur 1 ist schematisch die Frontansicht einer gattungsgemässen Vorrichtung zur Erfassung der Trefferlage eines fliegenden Objekts 11 auf einem definierten Trefferfeld 10 gezeigt. Zwei Radargeräte 20, 20' mit je einem Erfassungsbereich 21, 21' sind vor dem Trefferfeld angeordnet. Die Erfassungsbereiche sind durch Mittelachsen 22, 22' mit einem Richtungsvektor 23, 23' charakterisiert. Die Richtungsvektoren sind verschieden. Mit anderen Worten, die Richtungsvektoren zeigen in unterschiedliche Richtungen und liegen damit nicht parallel. Die Erfassungsbereiche überlappen sich am Rand. Das rechteckige Trefferfeld wird an jeder Stelle von mindestens einem Erfassungsbereich abgedeckt.

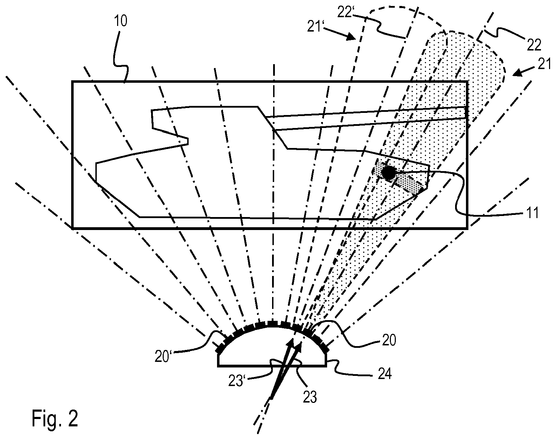

In Figur 2 ist eine Frontansicht auf eine weitere Vorrichtung dargestellt. Erfasst wird hier die Trefferlage auf rechteckiges Trefferfeld 10 mit Zielbild. Die Flugrichtung des fliegenden Objekts 11 fällt in dieser Ansicht mit der Blickrichtung zusammen, so dass der Auftreffpunkt des Objekts auf das Trefferfeld hinter dem Objekt liegt. Unterhalb und vor dem Trefferfeld 11 ist eine Anzahl von Radargeräten 20, 20' auf einem Trägerelement 24 angeordnet. Jedes Radargerät emittiert elektromagnetische Strahlung in einen Erfassungsbereich und empfängt reflektierte Strahlung aus diesem Erfassungsbereich. Der Erfassungsbereich hat die Form einer Radarkeule, welche durch eine Mittelachse 22, 22' und einen Richtungsvektor 23, 23' charakterisiert ist. Für ein Radargerät 20 ist der Erfassungsbereich 21 mit gestrichelter Umrandung und gepunkteter Füllung dargestellt. Ein fliegendes Objekt 11 befindet sich gerade in diesem Erfassungsbereich. Für ein dem Radargerät 20 benachbartes Radargerät 20' ist der Erfassungsbereich 21' mit gestrichelter Umrandung dargestellt. Aus Gründen der Übersichtlichkeit sind jeweils nur die Mittelachsen der Erfassungsbereiche der weiteren Radargeräte als strichpunktierte Linien eingezeichnet. Die Mittelachsen der Erfassungsbereiche der benachbarten Radargeräte 20, 20' haben verschiedene Richtungsvektoren 23, 23'. Die Richtungsvektoren bilden untereinander einem Winkel, der geringfügig kleiner ist, als der Öffnungswinkel der Radarkeule. Die Erfassungsbereiche überlappen in einem Bereich am Rand den Erfassungsbereich des benachbarten Radargeräts. Die Erfassungsbereiche der Radargeräte sind fächerartig angeordnet und überdecken das rechteckige Trefferfeld. In dieser Ansicht nicht sichtbar können im Trägerelement 24 beispielsweise eine Verkabelung der Radargeräte und eine elektronische Auswerteeinheit untergebracht sein. Aus der Distanzmessung und der bekannten geometrischen Lage des Erfassungsbereichs des Radargeräts, welches das Objekt erfasst hat, kann die Trefferlage im Trefferfeld auf das eng punktiert markierte Gebiet eingegrenzt werden.

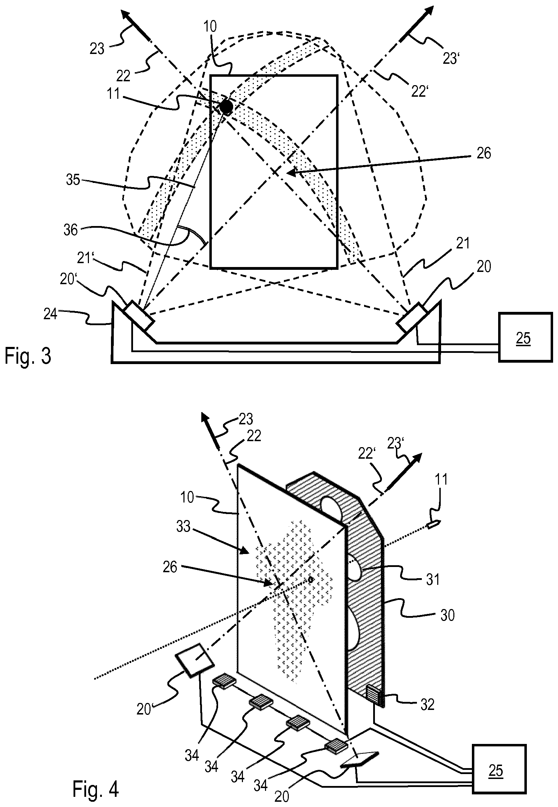

In Figur 3 ist eine Frontansicht einer weiteren Vorrichtung dargestellt. Die Erfassungsbereiche 21, 21' zweier Radargeräte 20, 20' liegen vor dem Rechteckigen Trefferfeld 10. Die Mittelachsen 22, 22' der Erfassungsbereiche schneiden sich in etwa rechtwinklig in einem Schnittpunkt 26 nahe am Mittelpunkt des Trefferfeldes. Damit stehen die Richtungsvektoren 23 und 23' im Wesentlichen rechtwinklig zueinander. Aus den ermittelten Distanzen zwischen je einem Radargerät und dem fliegenden Objekt, welches die Erfassungsbereiche durchquert ergeben sich zwei Sektorförmige Bereiche, die sich am tatsächlichen Ort des fliegenden Objekts schneiden. Die Erfassungsbereiche der Radargeräte haben hier einen Öffnungswinkel, der ausreichend gross ist, dass jeder der beiden Erfassungsbereiche für sich das gesamte Trefferfeld überdeckt. Die beiden Radargeräte sind auf einem starren Trägerelement 24 montiert, welches den Abstand und die Winkelausrichtung genau definiert. Die Radargeräte 20, 20' sind zum Datenaustausch mit einer Auswerteeinheit 25 verbunden.

Im Erfassungsbereich 21' des Radargeräts 20' ist gestrichelt die Verbindunglinie 35 zwischen dem Radargerät 20' und dem fliegenden Objekt 11 eingezeichnet. Diese Verbindungslinie 35 bildet einen Winkel 36 mit der Mittelachse 23' des Erfassungsbereichs 21'. In einer Ausführungsform des erfindungsgemässen Verfahrens wird dieser Winkel bestimmt und wird bei der Berechnung der Trefferlage berücksichtigt. Der Winkel 36 kann basierend auf Radarsignalen bestimmt werden, die im Radargerät 20' empfangen werden. Daraus ergibt sich die Lage der Verbindungslinie 35. Ein entsprechender - in der Figur 3 allerdings nicht eingezeichneter - Winkel kann auch zum Erfassungsbereich 21 bestimmt werden. In gezeigten Fall ist dieser zweite Winkel klein, das heisst das fliegende Objekt liegt nahe der Mittelachse 23 des Radargeräts 20. Diese Winkelinformationen können zusätzlich oder alternativ zu den oben genannten Distanzen verwendet werden, um die Trefferlage zu bestimmen.

In Figur 4 ist die räumliche Lage von Elementen einer Ausführungsform der erfindungsgemässen Vorrichtung dargestellt. Vor einem rechteckigen Trefferfeld 10 schneiden sich die Mittelachsen 22, 22' der Erfassungsbereiche zweier Radargeräte 20, 20'. Hinter dem Trefferfeld 10 ist eine Lochscheibe 30 angebracht. Ein Treffersensor 32 ist in direktem Kontakt mit der Lochscheibe. Die Radargeräte 20, 20' und der Treffersensor 32 sind mit einer Auswerteeinheit 25 wirkverbunden. Ein Geschoss, welches die Lochscheibe durchschlägt oder streift, wird durch den Treffersensor registriert. Wird mittels Ortung durch die Radargeräte ein Auftreffpunkt eines Geschosses im Bereich eines der Löcher ermittelt und spricht gleichzeitig der Treffersensor nicht an, so kann der Auftreffpunkt mit hoher Präzision als innerhalb des durch die Lage und Form des Lochs 31 definierten Gebiets liegend lokalisiert werden. In Figur 3 sind die Flugbahn und die Trefferlage eines Geschosses 11 dargestellt, welches das Loch 31 durchquert ohne die Lochscheibe zu berühren. Durch mehrere Löcher in der Lochscheibe können mehrere solche Gebiete überwacht werden. Auf diese Weise können beispielsweise wechselnde Motive des Zielbilds 33 in Kombination mit einer einzigen Lochscheibe mit mehreren Löchern verwendet werden. Vor dem Trefferfeld 10 sind vier Mikrophone 34 angeordnet, die ebenfalls mit der Auswerteeinheit 25 wirkverbunden sind. Mit diesen Mikrophonen kann der Zeitpunkt des Eintreffens eines Geschossknalls festgestellt werden. Bei der gezeigten Anordnung kann im Fall des Vorhandenseins eines Geschossknalls die zeitliche Differenz zwischen dem Eintreffen des Geschossknalls an den Orten der Mikrophone im Auswertungsverfahren berücksichtigt werden. Damit kann auf die Trefferlage in horizontaler und vertikaler Richtung zurückgeschlossen werden.

### Bezugszeichenliste

- 10: Trefferfeld
- 11: fliegendes Objekt
- 20, 20': Radargerät
- 21, 21': Erfassungsbereich (des Radargeräts)
- 22, 22': Mittelachse (des Erfassungsbereichs)
- 23, 23': Richtungsvektor (der Mittelachse)
- 24: Trägerelement
- 25: Auswerteeinheit
- 26: Schnittpunkt
- 30: Lochscheibe
- 31: Loch
- 32: Treffersensor
- 33: Zielbild
- 34: Mikrophon (zur Erfassung des Geschossknalls)
- 35: Verbindungslinie
- 36: Winkel

## Patentansprüche

1. Verfahren zur Ermittlung der Trefferlage von fliegenden Objekten (11) auf einem definierten Trefferfeld (10), wobei
- eine Anzahl von Radargeräten (20, 20') mit je einem Erfassungsbereich (21, 21') mit einer Mittelachse (22, 22') in zumindest einem Bereich in der Umgebung des Trefferfeld angeordnet werden,
- Distanzwerte eines durch die Erfassungsbereiche hindurch fliegenden Objektes erfasst werden,
- durch Auswertung dieser Distanzwerte und der bekannten geometrischen Anordnung der Radargeräte die Flugbahn des Objekts ermittelt wird, und
- danach aufgrund der ermittelten Flugbahn die daraus resultierende Trefferlage im Trefferfeld berechnet wird, wobei
sich die Erfassungsbereiche mindestens benachbarter Radargeräte mindestens bereichsweise überlappen oder berühren und wobei deren Mittelachsen verschiedene Richtungsvektoren (23, 23') haben,
**dadurch gekennzeichnet, dass** im Bereich des Trefferfeldes eine Scheibe (30) mit Treffersensor (32) angebracht wird und dass bei der Ermittlung der Trefferlage berücksichtigt wird, ob der Treffersensor angesprochen hat.

2. Verfahren nach Anspruch 1, **dadurch gekennzeichnet, dass** die Mittelachsen (22, 22') der Erfassungsbereiche fächerförmig angeordnet sind.

3. Verfahren nach einem der Ansprüche 1 oder 2, **dadurch gekennzeichnet, dass** sich Mittelachsen (22, 22') der Erfassungsbereiche in einem Schnittpunkt (26) schneiden.

4. Verfahren nach Anspruch 3, **dadurch gekennzeichnet, dass** Mittelachsen (22, 22') der Erfassungsbereiche auf einer Mantelfläche eines Kegels liegen.

5. Verfahren nach einem der Ansprüche 3 oder 4, **dadurch gekennzeichnet, dass** der Schnittpunkt (26) im Erfassungsbereich (21, 21') beider beteiligter Radargeräte liegt.

6. Verfahren nach einem der Ansprüche 1 bis 5, **dadurch gekennzeichnet, dass** die Richtungsvektoren (23, 23') der Mittelachsen zweier überlappender Erfassungsbereiche (21, 21') im Wesentlichen rechtwinklig zueinander stehen.

7. Verfahren nach einem der Ansprüche 1 bis 6, **dadurch gekennzeichnet dass** die Radargeräte (20, 20') als Doppler-Radar betrieben werden.

8. Verfahren nach einem der Ansprüche 1 bis 7, **dadurch gekennzeichnet, dass** die Scheibe (30) eine Lochscheibe ist.

9. Verfahren nach einem der Ansprüche 1 bis 8, **dadurch gekennzeichnet, dass** im Bereich des Trefferfelds mindestens ein Mikrophon angebracht wird und dass bei der Ermittlung der Trefferlage der Zeitpunkt von bei mindestens einem Mikrophon eintreffenden Schockwellen berücksichtigt wird.

10. Verfahren nach einem der Ansprüche 1 bis 9, **dadurch gekennzeichnet, dass** ein Flugwegvektor des fliegenden Objekts berechnet wird.

11. Verfahren nach einem der Ansprüche 1 bis 10, **dadurch gekennzeichnet, dass** ein Winkel (36) zwischen einer Verbindungslinie (35) von einem durch einen Erfassungsbereich hindurch fliegenden Objekt (11) zum erfassenden Radargerät (20, 20') und der Mittelachse (22, 22') des Erfassungsbereichs dieses Radargeräts aus den empfangenen Radarsignalen bestimmt wird, wobei der Winkel (36) aus einer Phasendifferenz zwischen der Phase von Radarsignalen bestimmt wird, die bei zwei voneinander beabstandeten Empfangselementen eintreffen, und dass dieser Winkel (36) bei der Berechnung der resultierende Trefferlage im Trefferfeld berücksichtigt wird.

12. Vorrichtung zur Durchführung des Verfahrens nach einem der Ansprüche 1 bis 11, **dadurch gekennzeichnet, dass** die Vorrichtung mit einer Auswerteeinheit (25) wirkverbundene Radargeräte (20, 20') mit je einem Erfassungsbereich (21, 21') mit einer Mittelachse (22, 22') umfasst, wobei sich die Erfassungsbereiche mindestens benachbarter Radargeräte mindestens bereichsweise überlappen oder berühren und deren Mittelachsen verschiedene Richtungsvektoren haben,
**dadurch gekennzeichnet, dass** die Vorrichtung ein Zielbild (33) und eine Lochscheibe (30) mit einem Treffersensor (32) umfasst, wobei das Zielbild vor, hinter oder direkt an der Lochscheibe angeordnet ist und wobei mindestens ein in die Lochscheibe geformtes Loch (31) in Form und Position an das Zielbild angepasst ist.

13. Vorrichtung nach Anspruch 12, **dadurch gekennzeichnet, dass** mehrere Radargeräte auf einem starren Trägerelement (24) angeordnet sind.

14. Vorrichtung nach einem der Ansprüche 12 oder 13, **dadurch gekennzeichnet, dass** die Radargeräte (20, 20') eine Phased-Array-Antenne umfassen.

15. Vorrichtung nach einem der Ansprüche 12 bis 14, **dadurch gekennzeichnet, dass** der Treffersensor (32)ein Druck- oder ein Beschleunigungssensor ist.

16. Vorrichtung nach einem der Ansprüche 12 bis 15, **dadurch gekennzeichnet, dass** die Radargeräte (20, 20') umfassen:
- ein Antennenmodul mit mindestens einem Sendeelement und mindestens zwei voneinander beabstandeten Empfangselementen und
- eine Phasendifferenz-Messeinheit zur Bestimmung einer Phasendifferenz zwischen der Phase von Signalen, die bei den Empfangselementen eintreffen.

## Claims

1. Method for determining the point of impact of flying objects (11) in a defined target area (10), wherein
- a number of radar units (20, 20') each having a detection area (21, 21') with a central axis (22, 22') are arranged in at least one area in the vicinity of the target area,
- distance values of an object flying through the detection areas are detected,
- the flight path of the object is determined by evaluating these distance values and the known geometric arrangement of the radar units, and
- the resulting point of impact in the target area is then calculated on the basis of the determined flight path, wherein
the detection areas of at least adjacent radar units overlap or touch each other at least in regions and wherein their central axes have different direction vectors (23, 23'),
**characterized in that** a target (30) with impact sensor (32) is fitted in the region of the target area, and **in that** the determination of the point of impact takes into account whether the impact sensor has responded.

2. Method according to claim 1, **characterized in that** the central axes (22, 22') of the detection areas are arranged in a fan shape.

3. Method according to one of claims 1 or 2, **characterized in that** central axes (22, 22') of the detection areas intersect at a point of intersection (26).

4. Method according to claim 3, **characterized in that** central axes (22, 22') of the detection areas lie on a lateral surface of a cone.

5. Method according to one of claims 3 or 4, **characterized in that** the point of intersection (26) lies in the detection area (21, 21') of both radar units involved.

6. Method according to one of claims 1 to 5, **characterized in that** the direction vectors (23, 23') of the central axes of two overlapping detection areas (21, 21') are essentially at right angles to each other.

7. Method according to one of claims 1 to 6, **characterized in that** the radar units (20, 20') are operated as Doppler radar.

8. Method according to one of claims 1 to 7, **characterized in that** the target (30) is a perforated disk.

9. Method according to one of claims 1 to 8, **characterized in that** at least one microphone is fitted in the region of the target area and **in that** the time of shock waves arriving at at least one microphone is taken into account when determining the point of impact.

10. Method according to one of claims 1 to 9, **characterized in that** a flight path vector of the flying object is calculated.

11. Method according to one of claims 1 to 10, **characterized in that** an angle (36) between a connecting line (35) from an object (11) flying through a detection area to the detecting radar unit (20, 20') and the central axis (22, 22') of the detection area of this radar unit is determined from the received radar signals, wherein the angle (36) is determined from a phase difference between the phase of radar signals arriving at two receiving elements spaced apart from one another, and **in that** this angle (36) is taken into account in the calculation of the resulting point of impact in the target area.

12. Device for carrying out the method according to one of claims 1 to 11, **characterized in that** the device comprises radar units (20, 20') which are operatively connected to an evaluation unit (25) and each comprise a detection area (21, 21') having a central axis (22, 22'), wherein the detection areas of at least adjacent radar units overlap or touch one another at least in regions and their central axes have different direction vectors, **characterized in that** the device comprises a target image (33) and a perforated disk (30) with an impact sensor (32), wherein the target image is arranged in front of, behind or directly on the perforated disk and wherein at least one hole (31) formed in the perforated disk is adapted in shape and position to the target image.

13. Device according to claim 12, **characterized in that** a plurality of radar units are arranged on a rigid support element (24).

14. Device according to one of claims 12 or 13, **characterized in that** the radar units (20, 20') comprise a phased-array antenna.

15. Device according to one of claims 12 to 14, **characterized in that** the impact sensor (32) is a pressure sensor or an acceleration sensor.

16. Device according to one of claims 12 to 15, **characterized in that** the radar units (20, 20') comprise:
- an antenna module comprising at least one transmitting element and at least two receiving elements spaced apart from each other, and
- a phase difference measuring unit for determining a phase difference between the phase of signals arriving at the receiving elements.

## Revendications

1. Procédé pour déterminer la position d'impact d'objets volants (11) sur un champ d'impact défini (10),
- une pluralité d'appareils radar (20, 20'), avec chacun une zone de détection (21, 21') et un axe médian (22, 22'), étant agencés dans au moins une zone située dans l'environnement du champ d'impact,
- des valeurs de distance d'un objet volant qui traverse les zones de détection étant détectées,
- la trajectoire de vol de l'objet étant déterminée par évaluation de ces valeurs de distance et de la disposition géométrique connue des appareils radar,
- puis, sur la base de la trajectoire de vol déterminée, la position d'impact qui en résulte dans le champ d'impact étant calculée,
dans lequel les zones de détection d'au moins des appareils radar adjacents se chevauchent ou se touchent au moins par endroits et dans lequel leurs axes médians présentent différents vecteurs de direction (23, 23'),
**caractérisé en ce qu'**il est monté dans la zone du champ d'impact une plaque (30) avec un capteur d'impact (32) et **en ce que**, lors de la détermination de la position d'impact, il est tenu compte du fait que le capteur d'impact ait répondu ou non.

2. Procédé selon la revendication 1, **caractérisé en ce que** les axes médians (22, 22') des zones de détection sont disposés en éventail.

3. Procédé selon l'une des revendications 1 ou 2, **caractérisé en ce que** les axes médians (22, 22') des zones de détection se croisent en un point d'intersection (26).

4. Procédé selon la revendication 3, **caractérisé en ce que** les axes médians (22, 22') des zones de détection se trouvent sur une surface latérale d'un cône.

5. Procédé selon l'une des revendications 3 ou 4, **caractérisé en ce que** le point d'intersection (26) se trouve dans la zone de détection (21, 21') des deux appareils radar concernés.

6. Procédé selon l'une des revendications 1 à 5, **caractérisé en ce que** les vecteurs de direction (23, 23') des axes médians de deux zones de détection qui se chevauchent (21, 21') sont sensiblement perpendiculaires l'un par rapport à l'autre.

7. Procédé selon l'une des revendications 1 à 6, **caractérisé en ce que** les appareils radar (20, 20') fonctionnent comme des radars Doppler.

8. Procédé selon l'une des revendications 1 à 7, **caractérisé en ce que** la plaque (30) est une plaque perforée.

9. Procédé selon l'une des revendications 1 à 8, **caractérisé en ce qu'**il est installé dans la zone du champ d'impact au moins un microphone, et **en ce que** lors de la détermination de la position d'impact, il est tenu compte du moment où les ondes de choc arrivent au niveau d'au moins un microphone.

10. Procédé selon l'une des revendications 1 à 9, **caractérisé en ce qu'**il est calculé un vecteur de trajectoire de vol de l'objet volant.

11. Procédé selon l'une des revendications 1 à 10, **caractérisé en ce qu'**il est déterminé, à partir des signaux radar reçus, un angle (36) entre une ligne de jonction (35) allant d'un objet (11) volant à travers une zone de détection jusqu'à un appareil radar détecteur (20, 20') et l'axe médian (22, 22') de la zone de détection de cet appareil radar, l'angle (36) étant déterminé à partir d'une différence de phase entre la phase des signaux radar qui arrivent sur deux éléments de réception espacés l'un de l'autre, et **en ce que** cet angle (36) est pris en compte pour le calcul de la position d'impact qui en résulte dans le champ d'impact.

12. Dispositif pour mettre en œuvre le procédé selon l'une des revendications 1 à 11, **caractérisé en ce que** le dispositif comprend des appareils radar (20, 20') en liaison active avec une unité de traitement (25) avec chacun une zone de détection (21, 21') et un axe médian (22, 22'), les zones de détection d'au moins des appareils radar adjacents se chevauchant ou se touchant au moins par endroits, et les axes médians de ces dernières ayant différents vecteurs de direction, **caractérisé en ce que** le dispositif comprend une image cible (33) et une plaque perforée (30) avec un capteur d'impact (32), l'image cible étant agencée devant, derrière ou directement sur la plaque perforée, et au moins un trou (31) réalisé dans la plaque perforée étant adapté au niveau de la forme et de la position à l'image cible.

13. Dispositif selon la revendication 12, **caractérisé en ce qu'**il est agencé plusieurs appareils radar sur un élément de support fixe (24).

14. Dispositif selon l'une des revendications 12 ou 13, **caractérisé en ce que** les appareils radar (20, 20') comprennent une antenne réseau à commande de phase.

15. Procédé selon l'une des revendications 12 à 14, **caractérisé en ce que** le capteur d'impact (32) est un capteur de pression ou un capteur d'accélération.

16. Dispositif selon l'une des revendications 12 à 15, **caractérisé en ce que** les appareils radar (20, 20') comprennent :
- un module d'antenne avec au moins un élément émetteur et au moins deux éléments récepteurs distancés l'un de l'autre, et
- une unité de mesure de différence de phase pour déterminer une différence de phase entre la phase des signaux qui arrivent sur les éléments récepteurs.
